(19) Europäisches Patentamt
European Patent Office
Office européen des brevets

(11) **EP 4 301 593 B1**

(12) **EUROPEAN PATENT SPECIFICATION**

(45) Date of publication and mention
of the grant of the patent:
**26.02.2025 Bulletin 2025/09**

(21) Application number: **22708233.6**

(22) Date of filing: **24.02.2022**

(51) International Patent Classification (IPC):
**B32B 7/04** *(2019.01)*       **B32B 27/16** *(2006.01)*
**B32B 27/18** *(2006.01)*      **B32B 27/26** *(2006.01)*
**B32B 27/28** *(2006.01)*      **B32B 27/32** *(2006.01)*
**B32B 27/36** *(2006.01)*      **B32B 7/035** *(2019.01)*

(52) Cooperative Patent Classification (CPC):
**B32B 7/04; B32B 7/035; B32B 27/16; B32B 27/18;
B32B 27/26; B32B 27/281; B32B 27/32;
B32B 27/36; B32B 27/365;** B32B 2250/22;
B32B 2250/244; B32B 2255/10; B32B 2255/26;
B32B 2270/00; B32B 2307/412;            (Cont.)

(86) International application number:
**PCT/IB2022/051647**

(87) International publication number:
**WO 2022/185162 (09.09.2022 Gazette 2022/36)**

(54) **MULTILAYER FILM COMPRISING POLYCARBONATE COPOLYMERS**

MEHRSCHICHTFOLIE AUS POLYCARBONATCOPOLYMEREN

FILM MULTICOUCHE COMPRENANT DES COPOLYMÈRES DE POLYCARBONATE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.03.2021 EP 21160172**

(43) Date of publication of application:
**10.01.2024 Bulletin 2024/02**

(73) Proprietor: **SHPP Global Technologies B.V.
4612 PX Bergen op Zoom (NL)**

(72) Inventors:
• **CHEN, Yi
Shanghai 201319 (CN)**
• **NEFS, Marco
4612 PX Bergen op Zoom (NL)**
• **ZHOU, Yuan
Shanghai 201319 (CN)**
• **GROSSIORD, Nadia
4612 PX Bergen op Zoom (NL)**

(74) Representative: **Modiano, Gabriella Diana et al
Modiano & Partners SA
Steinsdorfstraße 14
80538 München (DE)**

(56) References cited:
**WO-A1-2018/015922     WO-A1-2018/015932
WO-A1-2019/038640**

(52) Cooperative Patent Classification (CPC): (Cont.)
B32B 2307/546; B32B 2307/558; B32B 2307/584;
B32B 2307/704; B32B 2307/732; B32B 2457/20;
B32B 2457/208

**Description**

BACKGROUND

Disclosed herein are multilayer films, such as flexible multilayer films, methods of making multilayer films, and articles made therefrom.

Multilayer polymer films can provide desirable properties such as transparency in numerous products and applications. Unfortunately, these films can become hazy or cracked when bent or when impacted (e.g., due to dropping the product, or dropping something on the film).

WO 2018/142282 is directed to method of forming a microneedle array having alternating layers of material includes transforming a multilayer sheet by cutting, assembling, and stretching steps to form a stretched, stacked multilayer sheet. The stretched, stacked multilayer sheet is cut, assembled and stretched to form a film, the film is heated, and at least a portion of the film is caused to be displaced into a plurality of recesses thereby forming a plurality of protrusions at a surface of the film.

WO 2018/015932 is directed to a multilayer article can comprise: a multilayer substrate M, comprising: greater than or equal to 16 polymer A layers; and greater than or equal to 16 polymer B layers; wherein the polymer A layers and the polymer B layers are present in a ratio of 1:4 to 4:1; a protective layer P; and an identification layer I between the protective layer P and the multilayer substrate M; wherein the identification layer I comprises information, and wherein the protective layer P prevents alteration thereof.

WO 2018/015922 is directed to a multilayer structure can comprise: an outermost layer; a sensor; a multilayer substrate A located between the sensor and the outermost layer, the multilayer substrate, comprising greater than or equal to 16 polymer A layers; and greater than or equal to 16 polymer B layers; wherein the polymer A layers and the polymer B layers are present in a ratio of 1:4 to 4:1; wherein the multilayer substrate has a transmission of greater than or equal to 70%; wherein the structure has a water vapor transmission rate of less than or equal to 10 grams per cubic centimeter per day (g/cc/day).

It would be desirable to provide an improved multilayer film that is flexible (e.g., can be bent) and that is impact resistant.

SUMMARY

A multilayer film comprises a plurality of layers, preferably 4 layers to 128 layers, comprising, a polymer A layer comprising a polycarbonate copolymer wherein the polycarbonate copolymer comprises a copolymer of polycarbonate and iso- and terephthalate esters of resorcinol at a weight ratio of the iso- and terephthalate esters of resorcinol to the polycarbonate of 20/80; and a polymer B layer comprising a semi-crystalline biaxially-oriented polyester, wherein each polymer B layer has a crystallinity of 20 to 40%, determined by differential scanning calorimetry at a heating rate of 10°C per minute from 40 to 280°C; an interdiffusion region between each polymer A layer and polymer B layer, wherein a differential solubility parameter of polymer A towards polymer B ($\Delta\delta_{AB}$) is $2.6 \text{ MPa}^{1/2} \leq \Delta\delta_{AB} \leq 3.0 \text{ MPa}^{1/2}$; and wherein the multilayer film has an average impact dent depth of less than or equal to 15 $\mu$m as determined in accordance with an impact dent depth test and measured using an optical profiler having a 5x objective lens, 1x scan, white illumination, 0.5% threshold, 20 $\mu$m backscan length, and 20 $\mu$m scan length; wherein the impact dent depth test comprises impacting polymer A side of the multilayer film with a ball point pen tip from a height of 12 cm between the ball point pen tip and the multilayer film, by dropping a 5.4g polymer foam guider comprising the ball point pen tip onto the multilayer film to form an impact dent, wherein the average impact dent depth is an average of six measurements at different locations on the sample, wherein the ball point pen tip has a 1.0 mm ball tip diameter; and wherein the multilayer film has a dynamic flexure of greater than or equal to 200,000 cycles, as determined by bending 180° on a 10 mm radius cylinder at a rate of 1 hertz; and wherein the multilayer film, without any skin layers of masking films, has a total thickness of 30 $\mu$m to 70 $\mu$m.

An article comprises the multilayer film.

A method for producing the multilayer film comprises: (i) coextruding polymer A and polymer B; splitting the coextruded polymer A and polymer B to obtain two or more sub-streams; repositioning the sub-streams in an overlapping manner, and contacting the sub-streams to obtain alternating layers of polymer A and polymer B; and repeating the preceding steps until the desired number of layers has been attained; and passing the stream through a die to produce a multilayer film; and biaxially stretching the multilayer film, preferably at a temperature of 140 to 170°C and at a stretching rate of 10 to 500 % per second to provide the multilayer film; or (ii) separately extruding polymer A and polymer B to form individual polymer streams A and B; splitting the individual polymer streams A and B into more than 3 sub-streams, and recombining the sub-streams to form a recombined stream, alternating between the A and B sub-streams; and passing the recombined stream through a die to produce a multilayer film; and biaxially stretching the multilayer film, preferably at a temperature of 140 to 170°C and at a stretching rate of 10 to 500 % per second to provide the multilayer film.

The multilayer film can be used in an electronic device that has a dynamic flexure of greater than or equal to 200,000 cycles, as determined by bending 180° on a 10 mm radius cylinder at a rate of 1 hertz.

The above described and other features are exemplified by the following figures and detailed description.

BRIEF DESCRIPTION OF THE DRAWINGS

The following figures are exemplary embodiments.

FIG. 1 shows a plot of stretching ratio and retardation for examples 7, 8, 11 and 13.
FIG. 2 shows a plot of stretching ratio and retardation for examples 14, 15, 18 and 19.
FIG. 3 shows a plot of stretching ratio and retardation for examples 1, 2, 4 and 6.
FIG. 4 shows a plot of stretching ratio and retardation for examples 20-25.
FIG. 5 shows a plot of degree of crystallization vs. impact dent depth for monolayered PET films.
FIG. 6 shows a plot of degree of crystallization vs. impact dent depth for the multilayered films of the examples.

DETAILED DESCRIPTION

The present inventors have advantageously discovered a multilayered film exhibiting a unique combination of dynamic flexibility and impact performance with robust temperature stability. In an aspect, the multilayered films can further exhibit desirable optical properties. The aforementioned properties make the multilayered film particularly useful for applications requiring flexure, and for foldable application, e.g., for flexible cover lenses for foldable displays. It was surprisingly found that the desired combination of dynamic flexibility and impact performance with robust temperature stability can be attained with a polymer A layer comprising a polycarbonate copolymer wherein the polycarbonate copolymer comprises a copolymer of polycarbonate (e.g., bisphenol A polycarbonate) and iso- and terephthalate esters of resorcinol at a weight ratio of the iso- and terephthalate esters of resorcinol to the polycarbonate of 20/80; and a polymer B layer comprising a semi-crystalline biaxially-oriented polyester having a particular degree of crystallinity. A differential solubility parameter ($\Delta\delta_{AB}$) of polymer A towards polymer B ($\Delta\delta_{AB}$) is 2.6 MPa$^{1/2}$ ≤ $\Delta\delta_{AB}$ ≤ 3.0 MPa$^{1/2}$. An interdiffusion region is formed as a result of the contact between the polymer A layer and the polymer B layer, where commingling of the polymer A layer and the polymer B layer occurs.

As used herein, "differential solubility parameter" ($\Delta\delta_{AB}$) can be calculated by Formula (1):

$$\Delta\delta_{AB} = [(\delta_{HA} - \delta_{HB})^2 + (\delta_{vA} - \delta_{vB})^2]^{1/2} \qquad \text{Formula (1)}$$

where $\delta_{HA}$ is the Hansen hydrogen bonding solubility parameter of polymer A, $\delta_{vA}$ is the Hansen non-hydrogen bonding solubility parameter of polymer A, $\delta_{HB}$ is the Hansen hydrogen bonding solubility parameter of polymer B, $\delta_{vB}$ is the Hansen non-hydrogen bonding solubility parameter of polymer B. The Hansen non-hydrogen bonding solubility parameter of polymer A ($\delta_{vA}$) can be calculated by Formula (2):

$$\delta_{vA} = (\delta_{pA}^2 + \delta_{dA}^2)^{1/2} \qquad \text{Formula (2)}$$

where $\delta_{pA}$ is the Hansen polar solubility parameter of polymer A and $\delta_{dA}$ is the Hansen dispersive solubility parameter of polymer A. The Hansen non-hydrogen bonding solubility parameter of polymer B ($\delta_{vB}$) can be calculated by Formula (3):

$$\delta_{vB} = (\delta_{pB}^2 + \delta_{dB}^2)^{1/2} \qquad \text{Formula (3)}$$

where $\delta_{pB}$ is the Hansen polar solubility parameter of polymer B and $\delta_{dB}$ is the Hansen dispersive solubility parameter of polymer B. The Hansen polar solubility parameter, Hansen dispersive solubility parameter, and the Hansen hydrogen solubility parameter can be calculated by the van Krevelen group contribution method as described in van Krevelen, D.W., "Prediction of Solubility-Parameter Components", K.T. Nijenhuis (Ed.), Properties of Polymers, Elsevier, Amsterdam (1976), pp. 213-216. See also, Hansen, C.M., "Hansen Solubility Parameters: A User's Handbook", CRC (2007).

An indication of the rheological compatibility and thermodynamic miscibility of polymers can be provided graphically by the Hansen solubility parameters by using the following steps: 1) calculation of the Hansen solubility parameters for polymer A and polymer B as described above; 2) simplification of the Hansen solubility parameters into hydrogen-bonding and non-hydrogen-bonding as described above; 3) plot a 2D solubility parameter map, with a x-axis of Hansen non-hydrogen bonding solubility parameters, and a y-axis of Hansen hydrogen bonding solubility parameters; 4) assessment of the distance between polymer A and polymer B on the 2D solubility parameter map of step 3). If the distance between polymer A and polymer B on the 2D solubility parameter map is large there is low thermodynamic miscibility between the two polymers. If the distance between polymer A and polymer B on the 2D solubility parameter map is small, thermodynamic miscibility is high between polymer A and polymer B (and vice versa). For intermediate distances between polymer A and polymer B on the 2D solubility parameter map, polymer A can be rheologically compatible with polymer B, but may not have thermodynamic miscibility. By pairing polymers with such Hansen solubility parameters, rheological compatibility and thermodynamic miscibility in the multilayer films can be predicted.

As used herein, "rheologically compatible" or "rheological compatibility" means that two flowable polymers have viscosities (e.g., similar or the same viscosities) to prevent viscous encapsulation (e.g., when two molten polymers are flowed in a channel, the lower viscosity molten polymer goes to the channel wall, while the higher viscosity molten polymer goes to the center of a channel).

As used herein, "thermodynamically miscible" or "thermodynamic miscibility" means that two flowable polymers can be solubilized in, be dissolved into, be blended with, have an affinity with, form a gradient with, at least a portion of one another by thermodynamic mixing.

As used herein "flowable" refers to the ability to move as in a fluid form (e.g., as a polymer melt).

By providing a polymer A and a polymer B with a differential solubility parameter towards one another ($\Delta\delta_{AB}$) is 2.6 MPa$^{1/2}$ ≤ $\Delta\delta_{AB}$ ≤ 3.0 MPa$^{1/2}$; or 2.6 MPa$^{1/2}$ < $\Delta\delta_{AB}$ < 3.0 MPa$^{1/2}$

The polymer A can comprise a polycarbonate. For instance, the polymer A can comprise a polycarbonate copolymer, such as bisphenol A polycarbonate (PC) and iso- and terephthalate esters of resorcinol (ITR), preferably at a weight ratio of ITR/PC of 20/80.

The polymer A polycarbonate copolymer can include poly(aromatic ester-carbonate)s comprising bisphenol A carbonate units and isophthalate-terephthalate-bisphenol A ester units, also commonly referred to as poly(carbonate-ester)s (PCE) or poly(phthalate-carbonate)s (PPC), depending on the relative ratio of carbonate units and ester units. Another specific poly(ester-carbonate) comprises resorcinol isophthalate and terephthalate units and bisphenol A carbonate units, such as those commercially available under the trade name LEXAN SLX from SABIC.

The polymer B can comprise a semi-crystalline biaxially-oriented polyester, for example, poly(ethylene terephthalate) (PET). Desirably, the polymer B is poly(ethylene terephthalate) (PET). The PET can be formed from terephthalic acid and a combination of ethylene glycol and diethylene glycol.

Semi-crystallinity is defined as the material having a melting peak determined during a differential scanning calorimetry (DSC) experiment at a heating rate of 10°C/min from 25°C to 300°C according to ASTM E794-06. It is noted that the multilayer film has a crystallinity at or below the crystallinity of polymer B.

A biaxially-oriented polyester refers to a polyester which has been stretched or oriented in both cross and machine directions. Biaxial stretching can be achieved using methods further described below, and can include, for example, stretching at a temperature of 140 to 170 °C and at a stretching rate of 5 to 700 percent per second (%/s), or 10 to 500 % per second. In an aspect, the polyester can be biaxially stretched to a stretching ratio of greater than 1, for example greater than 1 to 11, or 1.1 to 11, or 1.1 to 10.5, or 1.1 to 5, or 1.1 to 3 or 1.2 to 3, or 1.25 to 3.

Advantageously, each polymer B layer has a crystallinity of 20 to 40%. Within this range, the crystallinity can be, for example, 22 to 40%, or 24 to 40%, or 26 to 40%, or 28 to 30%, or 30 to 40%, or 31 to 40%, or 20 to 30%, or 20 to 28%, or 20 to 26%, or 20 to 24%, or 20 to 23%, or 20 to 22%. In an aspect, the crystallinity can be, for example, 20 to 23% or 30 to 40%. In an aspect, the crystallinity can be, for example, 30 to 40%. Crystallinity can be determined, for example, by differential scanning calorimetry (DSC) at a heating rate of 10°C per minute from 40 to 280°C. Without wishing to be bound by theory, it is believed that the polymer B layer having the crystallinity of 20 to 40 % can provide the multilayer film with improved impact resistance.

The multilayer film can comprise a plurality of layers greater than or equal to 4 layers, for instance, greater than or equal to 8 layers. The total number of layers can be 4 to 128 layers, or 8 to 128 layers, or 8 to 64 layers.

A total thickness of the multilayer film can be 30 to 350 $\mu$m, such as 35 to 300 $\mu$m, or 35 to 250 $\mu$m, or 35 to 200 $\mu$m, or 35 to 100 $\mu$m, or 35 to 90 $\mu$m, or 35 to 80 $\mu$m, or 35 to 70 $\mu$m. A total thickness of the multilayer film without skin layers or mask films can be 30 to 70 $\mu$m, or 30 $\mu$m to 65 $\mu$m, or 30 $\mu$m to 60 $\mu$m, or 32 $\mu$m to 60 $\mu$m, or 35 $\mu$m to 60 $\mu$m. The thickness of individual layers can be 425 nanometers (nm) to 12.5 $\mu$m (measuring from the middle of the commingled interface to the middle of the adjacent commingled interface). In an aspect, the thickness of the skin layers can be 20 to 80% of the total film thickness.

At the interface of the polymer A layer and the polymer B layer, there is a commingling of polymer A and polymer B, e.g., forming an interdiffusion region comprising polymer A and polymer B.

The multilayer film of the present disclosure can exhibit a desirable combination of properties. The multilayer film can exhibit an average impact dent depth of less than or equal to 15 $\mu$m as determined in accordance with an impact dent depth test and measured using an optical profiler having a 5x objective lens, 1x scan, white illumination, 0.5% threshold, 20 $\mu$m backscan length, and 20 $\mu$m scan length. Impact dent depth testing comprises impacting polymer A side of the multilayer film with a ball point pen tip from a height of 12 cm between the ball point pen tip and the multilayer film, by dropping a 5.4g polymer foam guider comprising the ball point pen tip onto the multilayer film to form an impact dent. The average impact dent depth is an average of six measurements at different locations on the sample, wherein the ball point pen tip has a 1.0 mm ball tip diameter.

The multilayer film can be flexible. As used herein, "flexible" means that the film can be repetitively bent at a low bending radius (e.g., 2 mm or less) without exhibit cracking. In an aspect, the multilayer film has a dynamic flexure of greater than or equal to 200,000 cycles, as determined by bending 180° on a 10 mm radius cylinder at a rate of 1 hertz.

In an aspect, particularly when in-line biaxial stretching is used to prepare the multilayered film, the multilayered film can have a transmission at a wavelength of 360 nm to 750 nm of greater than or equal to 89% at the thickness of the multilayer film, as measured according to ASTM D1003-00, under D65 illumination, with a 10 degrees observer.

In an aspect, particularly when in-line biaxial stretching is used to prepare the multilayered film, the multilayer film can have a haze of less than or equal to 1% at the thickness of the multilayer film, as measured according to ASTM D1003-00, under D65 illumination, with a 10 degrees observer.

A method for producing the above-described multilayer films can include coextruding a polymer A stream and polymer B stream to form the multilayer film. By coextruding polymer A and polymer B in adjacent layers, adhesion is achieved between the layers. The method can include splitting a composite layer stream comprising polymer A stream and polymer B stream from the step of coextruding to obtain two or more sub-streams, repositioning the sub-streams an overlapping manner, and contacting the sub-streams to obtain alternating layers of polymer A and polymer B.

For instance, the method disclosed herein for making a multilayer film can include coextruding two or more feed streams in an overlapping manner to form a composite layer stream, e.g., feed streams comprising polymer A stream and polymer B stream, optionally 2 - 6 polymers, or 2 - 4 polymers. The feed streams can be coextruded using an extrusion cycle comprising splitting the composite layer stream into two or more sub-streams which can then be repositioned in an overlapping manner, followed by contacting the sub-streams (e.g., lamination). The extrusion cycle can be repeated until a total number of desired layers is achieved. The total number of layers can be represented by the formula $X(Y^N)$, wherein X represents the number of feed streams, Y represents the number of sub-streams, and N represents a number of times the extrusion cycle is repeated. For instance, the extrusion cycle can produce a multilayer film with polymer A layers and polymer B layers that overlap in an alternating manner and are present in a volume ratio of 20:80 to 80:20, or 40:60 to 60:40, preferably 45:55 to 55:45. Such multilayer films can be formed using the layer multiplication technology and equipment commercially available from Nordson Extrusion Dies Industries LLC, Chippewa Falls, WI.

The method disclosed herein for making a multilayer film can include contacting two or more feed streams in an overlapping manner forming a composite layer stream, e.g., within a feed block of a co-extrusion apparatus. The two or more feed streams can be overlaid vertically to form a composite layer stream.

Once the composite layer stream is formed, it can be processed in an extrusion cycle comprising splitting the composite layer stream into two or more sub-streams. For instance, the composite layer stream can be split vertically into two or more diverging sub-streams, wherein each sub-stream comprises at least a portion of each original feed stream. In other words, each sub-stream comprises a portion of all of the layers of the composite layer stream. The sub-streams can then be repositioned in an overlapping manner. For instance, each sub-stream can travel through its own divergent channel within a co-extrusion apparatus which direct the sub-streams to an overlaid position (e.g., a vertically overlaid position) where the sub-streams contact one another to form a subsequent composite layer stream comprising both of the sub-streams aligned (e.g., vertically). The extrusion cycle combines the two or more sub-streams. For instance, the sub-streams are released from the vertically overlaid channels, thus contacting each other in an overlapping manner. The extrusion cycle can be repeated until a multilayer film having the desired number of layers is achieved.

The method further comprises biaxially stretching the multilayer film. The biaxial stretching can be conducted at the die, wherein the film extrusion and the stretching can occur in a single step (also known as "in line stretching"). Alternatively, the biaxial stretching can be conducted in a separate step following extrusion, e.g., following removal of the multilayer film from the die (also known as "off-line stretching"). Off-line stretching can be performed as sequential biaxial stretching, wherein stretching in each direction occurs sequentially, or can be performed as simultaneous biaxial stretching, wherein in stretching in each direction occurs at the same time. In an aspect, off-line stretching can be used, where the film can be extruded as described above, cut to a desired size, and then stretched. The film can be stretched using a machine direction orienter to stretch the film in the machine direction, thereby decreasing the thickness of the film. In a second step, the stretched film can be further stretched in the transverse direction (e.g., perpendicular to the machine direction) using a transverse direction orienter, thereby further decreasing the thickness of the film.

In an aspect, in-line stretching can be used, wherein the stretching is conducted continuously directly on the film after extrusion. Thus, the stretching can be conducted such that the machine direction and transverse direction stretching occur at the same time using a specialized tenter. Without wishing to be bound by theory, it is believed that a simultaneous stretching process can provide multilayer films having improved optical and mechanical properties.

In an aspect, the multilayer film can be biaxially stretched using an off-line stretching process at a temperature of 140 to 170 °C and at a stretching rate of 5 to 700 percent per second (%/s). In an aspect, the stretching rate can be 3.7 to 518 millimeters per second (mm/s). In an aspect, the multilayer film can be biaxially stretched using an off-line stretching process to a stretching ratio of greater than 1, for example greater than 1 to 11, or 1.1 to 11, or 1.1 to 10.5, or 1.1 to 5, or 1.1 to 3 or 1.2 to 3, or 1.25 to 3.

The multilayer film can comprise a skin layer, which can optionally be extruded simultaneously with the polymer A and polymer B core layers of the multilayer film. In another aspect, a skin layer can be applied to one or both sides (e.g., opposing sides) of the multilayer film subsequent to extrusion of the A and B layers. The skin layer can have a thickness of 1 to 10 $\mu$m. Preferably, the skin layer can have a thickness of 1 to 10 $\mu$m after the multilayer film has been stretched. If the skin layer is the same composition as the polymer A or polymer B, the skin layer can become part of the multilayer film. For example, the skin layer can be semi-crystalline polyester (e.g., PET). Preferably, any skin layers can be applied to the multilayered film prior to stretching. In an aspect the skin layers, when present, can be produced at the same time as the multilayered film.

Optionally, a mask film can be used on one side or opposing sides of the multilayer film for protection during processing and can be thereafter removed. Preferably, when present, the mask film can be applied to the multilayer film after extrusion and stretching, and any other optional secondary processing steps. If the skin layer is to be removed, it can comprise, for example, a polyolefin such as polypropylene. The mask film can have a thickness of 10 to 100 $\mu$m, or 20 to 70 $\mu$m, or 30 to 60 $\mu$m, or 40 to 60 $\mu$m.

The total number of layers can be represented by the formula $X(Y^N)$, wherein X represents the number of feed streams, Y represents the number of sub-streams, and N represents a number of times the extrusion cycle is repeated. For instance, the extrusion cycle can produce a multilayer film with polymer A layers and polymer B layers that are distinguishable and overlap in an alternating manner.

The multilayer film can be formed using an extrusion feedblock that enables multilayer arrangements. Using an extrusion feedblock, the polymer A stream and polymer B stream can each be individually split into many (e.g., more than 10) substreams, which are then alternatingly recombined to form the multilayer film. For instance, extrusion feedblocks such as those commercially available from Cloeren Inc., Orange Texas, USA.

For co-extruding polymer A and polymer B, any temperature above the glass transition temperature or melting point of both polymers, and below a temperature at which one of the polymers starts to degrade, can be used. The temperature can be one at which the viscosities of the polymers are closely matched, and the viscosities of both polymers are not too high (as it requires too high pressures to operate the extruders), but also not too low so there is not enough melt strength in forming the film out of the die. For instance, the coextruding can be at a temperature of 200°C to 350°C, or 220°C to 320°C, preferably 240°C to 300°C. In selecting a temperature for co-extruding, the resulting viscosities of polymer A stream and polymer B stream can be matched (e.g., a ratio of 2:1 to 1:2) such that, for example adhesion between adjacent portions of the feed streams is achieved and optionally, such that distortion or viscous encapsulation of the layers is reduced or eliminated.

The coextruded polymer A and polymer B can be maintained such that both the polymer A is above its glass transition temperature (Tg) and polymer B is above its melting point (Tm) for a sufficient period of time to enable the interface of polymer A layer and polymer B layer to commingle e.g., to form the interdiffusion region comprising both polymer A and polymer B. It is understood that the temperature is maintained below a temperature which will degrade the materials such that they don't meet the desired transparency, dynamic flexure, and impact properties.

As used herein, "glass transition temperature" or (Tg) refers to a temperature at which an amorphous polymeric material changes from a hard, solid-like state into a viscous or elastic fluid-like state, as determined according to ASTM E1640-13. As used herein, "melting point" refers to a temperature at which a semi-crystalline or crystalline polymeric material changes from a hard, solid-like state into a viscous or elastic fluid-like state, as determined by differential scanning calorimetry (DSC 8000 from PerkinElmer, UK) at a heating rate of 10°C/min from 25°C to 300°C according to ASTM E794-06.

The multilayer film can have a coating on one or both sides (e.g., opposing sides) thereof. The coating can be directly on the outermost polymer layer A, directly on the outermost polymer layer B, or on the skin layer), preferably the coating is on one side of the multilayer film. The polymer coating has a hardness (H) to modulus (E) characterized by nano-indentation. The hardness and modulus can be determined using the Nano-Indenter XP (Key sight Technologies, CA, USA) with a three-sided Berkovich diamond tip (end diameter ~50 nm) for the indentation. The load and displacement data obtained in the nano-indentation test is analyzed according to the model developed by Oliver and Pharr (see, e.g., W.C. Oliver, G.M. Pharr, J. Mater. Res., 7, (6), 1992, 1564-1583).

The coating can be applied by optionally treating the side(s) of the multilayer film that will receive the coating (e.g., a surface activation treatment such as plasma activation). The coating can then be deposited on the multilayer film; e.g., a precursor solution (e.g., polymer, solvent, and any additive(s)) can be deposited onto the multilayer film via, for example, slot die coating, dip coating, flow coating, spin coating, spray coating, bar coating, knife-edge coating, screen printing, flexography, gravure printing, ink jet printing, chemical vapor deposition, plasma coating, etc. The coating can then be dried and/or cross-linked (thermal or UV curing depending of the mixture used) as is appropriate.

Examples of possible polymer for the coating can include radiation-curable polymers and/or heat curable polymers, such as polyurethane, polysiloxane, acrylic polymers, cellulose ethers and esters, polysaccharides, polyethers, polyesters, epoxy-containing polymers, styrene, polyimide, fluoropolymers, polysulfide, and combinations comprising at least one of the foregoing; e.g., can comprise a copolymer such as styrene-acrylate copolymer, styrene-butadiene copolymer, or acrylonitrile butadiene styrene copolymer.

Some possible coatings include stabilizing coatings (e.g., heat stabilizing, light stabilizing, ultraviolet (UV) light stabilizing, and radiation stabilizing), antistatic coatings, antimicrobial coatings, antireflective coatings, and reflective coatings (e.g., blue light reflective coatings). Optionally, on the other side (e.g., the opposing side) of the multilayer film can be a skin, an adhesive layer, a coating (e.g., for scratch resistance and surface hardness enhancement). For example, the other side of the multilayer film can have an anti-reflective coating.

Additive(s) can be used in the coating to achieve a desired property, with the proviso that the additive(s) are also selected so as to not significantly adversely affect a desired property multilayer film (e.g., transparency, dynamic flexure, and indent depth). Some possible additive(s) include one or more of viscosity modifier, polymer binder, stabilizer(s), nanoparticles, antioxidants, nucleating agents, clarifying agents, or impact modifier.

The desired coating has a ratio of hardness to modulus (H/E) of less than or equal to 0.1; and greater than or equal to 0.03, preferably greater than or equal to 0.05.

The coating can have a thickness of less than or equal to 25 μm, preferably less than or equal to 15 μm, more preferably less than or equal to 10 μm.

The multilayer film(s) can be used in an article. For example, the article can be a touch screen (e.g., five-wire resistive touch screen, surface capacitive touch screen, projected capacitive touch screen, surface acoustic wave touch screen, optical imaging touch screen, or infrared touch screen). The article can be a display article with flexure, such as at least one of flexible wristwatch, clothing with integrated display, curved vehicle display, or rollable screen (e.g., a rollable television screen). The article can comprise a cellular phone or a tablet.

Examples of flexible electronic devices include: wearable electronics (such as a watch (e.g., wherein the screen is bent to form around the wrist of the wearer), or a display incorporated into a piece of clothing), medical instrument, a mobile phone or tablet whose screen can be folded to reduce storage space, a television screen (e.g., that can be rolled up into cylinder, or folded for storage).

If the multilayer film comprises the coating, the coating can be located on a side of the multilayer film opposite the electronic component, for example to provide a protective function for the electronic components. The coating can also be located on the multilayer film on the side of the electronic component to provide anti reflective property and/or enhanced light extraction. The coating can also provide other functionalities such as anti-static and/or modify the wetting characteristics of the film.

This disclosure is further illustrated by the following examples, which are nonlimiting.

EXAMPLES

Materials for the following examples are listed in Table 1.

Table 1

| Component | Description | Source |
|---|---|---|
| PC | Copolymer of BPA polycarbonate and iso- and terephthalate esters of resorcinol (20/80 ITR/BPA) obtained as LEXAN SLX2271T | SABIC |
| PET | Low viscosity poly(ethylene terephthalate) commercially sold under the trade name ARNITE A02 307; having a crystallinity of 29.1 % | DSM Engineering Plastics |
| PET-BS-1 | Bi-axially stretched poly(ethylene terephthalate) film having a thickness of 75 micrometers obtained as BoPET OAN 0001 | Tenolan |
| PET-BS-2 | Bi-axially stretched poly(ethylene terephthalate) film having a thickness of 50 micrometers obtained as LUMIRROR 40.01 | Toray |
| PET-BS-3 | Bi-axially stretched poly(ethylene terephthalate) film having a thickness of 125 micrometers obtained as MELINEX ST506 | DuPont Teijin Films |

Multilayer films were prepared using Layer Multiplication Technology from Nordson-EDI (Chippewa Falls, Wisconsin). A total of 3 and 6 splitters, respectively, were used for layer multiplication, which provided 17 and 128 layers, respectively, alternating layers. For all of the multilayered films, a polypropylene skin layer was applied to the multilayer material after layer multiplication, but before the polymer entered a coat hanger die. The function of this polypropylene skin layer was to protect the multilayer structure in the die as well as in the solid state. The polypropylene skin layer was removed prior to performing measurements on the multilayer films.

Two polymer streams were fed into the multiplication units and the feedblock by single screw extruders. A single screw extruder was also used to feed the polymer stream for the skin layer. When producing samples which included PET, temperatures were set to 270°C to be well above the melting point of the PET. All other samples were produced at 240°C, which was well above the melting point of all materials, and which obtained a good viscosity match.

The weight loss in the polymer hoppers above the extruders was tracked, which allowed for real-time adjustment to the rotations per minute (rpm) of each extruder to give a constant mass flow of each polymer. A 500 millimeter (mm) wide coat hanger die was used, with a die lip opening of 500 $\mu$m. The multilayer films were cut to be 300 mm wide. A total throughput of the system was 14 to 20 kilograms per hour (kg/hr), resulting in a throughput of 4 kg/hr for the polycarbonate, a throughput of about 4 kg/hr of the other material (depending on the density difference), and a throughput of 6 to 12 kg/hr for the polypropylene.

The uptake speed of the roll stack behind the die was set to 5 meters per minute (m/min) to produce a 50 $\mu$m thick multilayer film after removal of the skin layer. Adjustment of the uptake speed was used to adjust the total thickness of the multilayer film in order to generate thicker films to be biaxially stretched offline.

The MLE films so prepared were subjected to biaxial stretching using a Bruckner KARO IV lab machine. The stretching was conducted using an off-line stretching process at a setting temperature of 140-170 °C using a stretching rate of 5 to 500 %/s and stretching ratios of 1x1 to 4x5. Following stretching, the films were annealed at 180-200 °C for 30-60 seconds.

It is noted that for all examples in Table 2 that list 1 layer ("monolayer"), there is a single layer because it is a single material and the layers cannot be distinguished. However, 17 layers of the material were formed together into the single layer using the same equipment and processing conditions set forth above.

Physical measurements were conducted using the tests and test methods described below.

Film thickness was determined using a Hanatek Precision Thickness Gauge. For each film, the average value of 12 measurements performed at 4 different locations of a given film is reported.

Tensile properties, namely Young's modulus, strain-at-break, strain-at-yield, stress-at-yield, stress-at-break, were determined based on ISO 527-3 (1995 version) using a Zwick Z5.0 tensile machine and testXpert II software. Results of the tensile testing are reported as an average of ten tests, with five conducted in the flow direction and five conducted in the cross flow direction.

Foldability Testing was carried out by determining dynamic flexibility, measured by 180°, 1 hertz (Hz), bending around a 2 mm radius cylinder. A passing result was greater than (>) 200,000 (i.e., 200K) repeated bending without cracking as determined visually with the unaided eye having normal vision (20/20 vision). The folding recovery level was rated according to four levels: none > slightly > severe >broken. "Slight" means that the fold line can be discerned by reflection of light but is not felt by touch. "Severe" means that the fold line can be seen and felt by the touch of an operator (not specifically trained). Samples were also characterized for formation of microcracks. Crack formation was determined by optical (Olympus MX61) microscopy using a magnification of 50X. Analysis of crack formation was done for samples which were able to bend without breaking after 200,000 bending cycles. Samples were characterized as having no microcracks, microcracks only, or cracks formed during the flex test, perpendicular to the bending direction.

"Impact dent depth test", as used herein is in accordance with "Method and Device for Evaluation of Impact Resistance of Surfaces and Films", by Pieter Janssen et al., IP.com, No. IPCOM000257652D (dated February 27, 2019). The dent generated by the dropping on the multilayer films of a falling object comprising the tip of a ballpoint pen having a 1.0 mm ball tip diameter. For the experiments, the tip of a BIC (brand name) Crystal Original ballpoint pen was used. To ensure a uniform impact and make sure that the pen tip impact is perpendicular to the sample surface (i.e. no tilting of the pen occurs during its fall), the tip of the pen is installed on a polymer foam guider of 49.8 mm of diameter and 38 mm height. The guider and pen tip possess a combined weight of approximately 5.4 g. The guider with pen tip is placed inside a steel tube, called the drop tower. The inner diameter of the steel tube was 51 mm, and the inside was polished to reduce any friction with the guider. To produce quantitative data, the guider and pen tip were subsequently dropped from 12 cm height (distance between the end of the tip and the sample surface). The results were analyzed (depth, width, uniformity) by an optical profiler (e.g., BRUKER Contour GT-K Optical Profiler) having a measurement type: VSI/VXI, 5x objective lens, 1x scan, white illumination, 0.5% threshold, 20 $\mu$m backscan length, 20 $\mu$m scan length. Each data point of the present disclosure is the average of six measurements taken at different locations on the surface of the sample. For all multilayer (MLE) samples tested, impact performance was tested on the polymer A (e.g., polycarbonate copolymer or homopolymer) side of the samples. Desirably, no visible mark would be produced on the film by a pen falling from a height of 12 cm. A dent depth of less than (<) 15 $\mu$m was considered a pass.

Hansen solubility parameters, i.e., Hansen polar solubility parameter, Hansen dispersive solubility parameter, and the Hansen hydrogen solubility parameter, can be calculated as described above, by the van Krevelen group contribution method as described in van Krevelen, D.W., "Prediction of Solubility-Parameter Components", K.T. Nijenhuis (Ed.), Properties of Polymers, Elsevier, Amsterdam (1976), pp. 213-216. See also, Hansen, C.M., "Hansen Solubility Parameters: A User's Handbook", CRC (2007).

The PC used in the following examples has a Hansen hydrogen bonding solubility parameter $\delta_{HA}$ of 7.2. The PET used in the following examples has a Hansen hydrogen bonding solubility parameter $\delta_{HA}$ of 9.9. The PC and the PET have a differential solubility parameter $\Delta\delta_{AB}$ of 2.73, calculated according to Formula 1:

$$\Delta\delta_{AB} = [(\delta_{HA} - \delta_{HB})^2 + (\delta_{vA} - \delta_{vB})^2]^{1/2} \qquad \text{Formula (1)}$$

Degree of crystallization ("Crys.") was determined by differential scanning calorimetry (DSC) TA Q2000 under $N_2$ environment with a heating rate at 10°C/min from 40°C to 280°C. Crystallinity was calculated from DSC curves using the following equation:

$$\chi = \frac{\Delta H \text{ melt} - \Delta H \text{ cc}}{\Delta H \text{ 100\% crystalline}} * \frac{100\%}{\%PET \text{ } in \text{ } film} * 100 \qquad \text{Formula (4)}$$

where $\Delta H$ melt is heat of fusion of the film, $\Delta H_c$ the cold crystallization, $\Delta H$ 100% crystalline is the heat of fusion of 100% crystalline PET ($\Delta H$ 100% = 140.1 J/g), "% PET in film" is the amount of PET used in the film. The degree of crystallinity in the film resulting from the process conditions that were used to produce the films is calculated from the heat of fusion during melting in the first heating cycle subtracted by the enthalpy of crystallization during the cold crystallization (first heating used).

Retardation ("Ret.") was measured using a SCA-1500 stress scanner from Strainoptic Technologies, Inc. For each sample three films were tested and the value reported was the average value of sixteen measurements performed at fixed locations of each film (48 points used).

Film compositions and results are provided in Table 2.

Table 2

| | 1 | 2 | 3 | 4 | 5 | 6 | 7 | 8 | 9 | 10 | 11 | 12 | 13 | 14 | 15 | 16 | 17 | 18 | 19 |
|---|---|---|---|---|---|---|---|---|---|---|---|---|---|---|---|---|---|---|---|
| Composition (A:B) | PC:PET (50:50) | PC:PET (50:50) | PC:PET (50:50) | PC:PET (50:50) | PC:PET (50:50) | PC:PET (50:50) | PC:PET (50:50) | PC:PET (50:50) | PC:PET (50:50) | PC:PET (50:50) | PC:PET (50:50) | PC:PET (50:50) | PC:PET (50:50) | PET:PC (67:33) | PET:PC (67:33) | PET:PC (67:33) | PET:PC (67:33) | PET:PC (67:33) | PET:PC (67:33) |
| No. layers | 128 | 128 | 128 | 128 | 128 | 128 | 17 | 17 | 17 | 17 | 17 | 17 | 17 | 17 | 17 | 17 | 17 | 17 | 17 |
| Original thick. (um) | 50 | 100 | 250 | 350 | 350 | 350 | 50 | 100 | 150 | 200 | 250 | 350 | 350 | 50 | 100 | 150 | 200 | 250 | 350 |
| Target stretched thick. (um) | 50 | 50 | 50 | 50 | 40 | 50 | 50 | 50 | 50 | 50 | 50 | 50 | 40 | 50 | 50 | 50 | 50 | 50 | 50 |
| Measured stretched thick. (μm) | 47 | 54.8 | 57.9 | 59.3 | 46.5 | 48.3 | 52.6 | 56.7 | 53.4 | 57.1 | 51.8 | 49.1 | 39.7 | 50.3 | 54.4 | 52.3 | 56.9 | 57.4 | 47.2 |
| Stretching Ratio, target | -- | 1.42 | 2.24 | 2.65 | 2.96 | 2.9 | -- | 1.42 | 1.74 | 2 | 2.24 | 2.9 | 3.15 | -- | 1.42 | 1.74 | 2 | 2.24 | 2.9 |
| Stretching ratio, calc | 1 | 1.35 | 2.08 | 2.43 | 2.74 | 2.69 | 1 | 1.33 | 1.67 | 1.87 | 2.2 | 2.67 | 2.97 | 1 | 1.35 | 1.69 | 1.87 | 2.08 | 2.72 |
| Impact depth (μm) (std. dev., μm) | 38.4 (4.4) | 14.9 (1.0) | 6.3 (1.3) | 3.1 (0.9) | < 3 (-) | 5.9 (1.1) | 42.9 (3.8) | 13.3 (1.3) | 14.8 (1.0) | 11.9 (0.9) | 9.6 (1.1) | 7.4 (0.9) | 9.9 (1.2) | 41 (6.2) | 10.9 (1.2) | 8.7 (0.9) | 6 (0.8) | 5.8 (0.9) | 5.2 (1.0) |
| Foldability test (200K) | Pass | Pass | Pass | Pass | Pass | Pass | Pass | Pass | Pass | Pass | Pass | Pass | Pass | Pass | Pass | Pass | Pass | Pass | Pass |
| Fold line visibility | Slight | None | None | None | None | None | Slight | None | None | None | None | None | None | Slight | None | None | None | None | None |
| Microcracks | No | No | No | No | No | No | No | No | No | No | No | No | No | No | No | No | No | No | No |
| Young's Mod (MPa): MD (std. dev.) | 2600 (14) | 2762 (162) | 3040 (129) | 3105 (94) | 3503 (88) | 4244 (172) | 2930 (60) | 3398 (184) | 3707 (227) | 3577 (86) | 4224 (172) | 3940 (169) | 4143 (167) | 2958 (75) | 3846 (405) | 3891 (255) | 4204 (384) | 4317 (396) | 5112 (207) |
| Young's Mod (MPa): TD (std. dev.) | 2600 (32) | 2759 (35) | 2881 (35) | 3014 (72) | 3428 (75) | 4246 (84) | 2955 (97) | 3265 (26) | 3785 (51) | 3485 (46) | 4227 (93) | 3587 (84) | 3896 (60) | 3063 (34) | 3890 (48) | 3853 (170) | 3836 (87) | 4292 (105) | 4330 (143) |

(continued)

| | 1 | 2 | 3 | 4 | 5 | 6 | 7 | 8 | 9 | 10 | 11 | 12 | 13 | 14 | 15 | 16 | 17 | 18 | 19 |
|---|---|---|---|---|---|---|---|---|---|---|---|---|---|---|---|---|---|---|---|
| Tens. Stress at Yield (MPa): MD (std. dev.) | 48 (5) | 69 (5) | 92 (16) | 101 (17) | 101 (23) | 92 (4) | 60 (1) | 74 (4) | 80 (5) | 76 (2) | 89 (3) | 87 (4) | 87 (0) | 61 (1) | 83 (9) | 83 (5) | 89 (8) | 91 (8) | 113 (3) |
| Tens. Stress at Yield (MPa): TD (std. dev.) | 53 (1) | 69 (3) | 81 (9) | 96 (17) | 95 (16) | 92 (2) | 60 (2) | 71 (1) | 83 (1) | 76 (1) | 91 (1) | 79 (2) | 87 (2) | 64 (0) | 83 (2) | 81 (5) | 83 (3) | 92 (2) | 94 (4) |
| Tens. Stress at Break (MPa): MD (std. dev.) | 55 (2) | 71 (5) | 109 (10) | 118 (3) | 126 (3) | 130 (4) | 60 (7) | 79 (8) | 94 (9) | 87 (11) | 114 (9) | 124 (7) | 133 (10) | 56 (7) | 91 (12) | 97 (14) | 115 (13) | 120 (19) | 152 (24) |
| Tens. Stress at Break (MPa): TD (std. dev.) | 57 (3) | 72 (3) | 95 (4) | 108 (18) | 113 (13) | 133 (5) | 62 (5) | 78 (3) | 91 (6) | 95 (6) | 116 (6) | 115 (10) | 128 (8) | 56 (5) | 87 (2) | 96 (10) | 104 (3) | 119 (13) | 135 (6) |
| Tens. Strain at Yield (%): MD (std. dev.) | 2.9 (0) | 3.8 (0.1) | 4.5 (0.1) | 4.7 (0) | 5.2 (0.1) | 4.7 (0.2) | 2.9 (0.1) | 4 (0.2) | 4.1 (0.2) | 4.1 (0.3) | 4.2 (0.2) | 4.9 (0.1) | 5.5 (0) | 2.8 (0.1) | 3.8 (0.1) | 4.1 (0.2) | 4.3 (0.1) | 4.4 (0.2) | 5.2 (0.2) |
| Tens. Strain at Yield (%): TD (std. dev.) | 2.9 (0.1) | 3.7 (0.1) | 4.2 (0.1) | 4.5 (0.2) | 4.7 (0.1) | 4.7 (0.1) | 2.8 (0) | 3.8 (0.1) | 4.1 (0.1) | 4.2 (0.1) | 4.1 (0.2) | 4.6 (0.2) | 5.1 (0.2) | 2.8 (0) | 3.4 (0.3) | 3.4 (0.3) | 4.2 (0.2) | 4.2 (0.2) | 5.2 (0.2) |
| Tens. Strain at Break (%): MD (std. dev.) | 114 (8) | 91 (9) | 82 (7) | 61 (4) | 65 (1) | 57 (7) | 102 (15) | 94 (11) | 88 (6) | 69 (14) | 74 (6) | 63 (6) | 56 (8) | 81 (62) | 115 (7) | 94 (14) | 96 (14) | 85 (5) | 62 (9) |
| Tens. Strain at Break (%): TD (std. dev.) | 117 (5) | 91 (10) | 83 (5) | 67 (12) | 54 (13) | 70 (3) | 106 (16) | 98 (7) | 85 (13) | 87 (10) | 86 (7) | 74 (15) | 62 (10) | 106 (38) | 115 (7) | 103 (11) | 98 (4) | 101 (5) | 66 (6) |
| Crystallinity (%) | 7.8 | 23.2 | 24.4 | 22.6 | 25.4 | 32.7 | 8.6 | 29.8 | 31.2 | 33.2 | 33.8 | 30.8 | 34.6 | 7.5 | 28.3 | 30.1 | 26.8 | 29.1 | 28.8 |
| Ret. (nm) (std. dev) | 5.8 (0.4) | 166 (80) | -- | 299 (137) | -- | 212 (79) | 5 (0.2) | 154 (75) | -- | -- | 337 (120) | -- | 250 (147) | 5.3 (0.3) | 275 (127) | -- | -- | 442 (205) | 379 (184) |

Table 2 (cont.)

| | 20 | 21 | 22 | 23 | 24 | 25 | 26 | 27 | 28 | 29 | 30 | 31 |
|---|---|---|---|---|---|---|---|---|---|---|---|---|
| Composition (A:B) | PET | PET | PET | PET | PET | PET | PC | PC | PC | PC | PC | PC |
| No. layers | Mono | Mono | Mono | Mono | Mono | Mono | Mono | Mono | Mono | Mono | Mono | Mono |
| Original thick. (μm) | 50 | 100 | 150 | 200 | 250 | 350 | 50 | 100 | 150 | 200 | 250 | 350 |
| Target stretched thick. (μm) | 50 | 50 | 50 | 50 | 50 | 50 | 50 | 50 | 50 | 50 | 50 | 50 |
| Measured stretched thick. (μm) | 52.4 | 55.8 | 54.3 | 55.6 | 54.4 | 48.4 | 50.3 | 49.1 | Broken | Broken | Broken | Broken |
| Stretching Ratio, target | -- | 1.42 | 1.74 | 2 | 2.24 | 2.9 | -- | 1.42 | 1.74 | 2 | 2.24 | 2.9 |
| Stretching ratio, calc | 1 | 1.34 | 1.66 | 1.89 | 2.12 | 2.69 | 1 | 1.42 | Broken | Broken | Broken | Broken |
| Impact depth (μm) (std. dev., μm) | 26.1 (5.3) | 41.2 (4.6) | 32.4 (3.0) | 6.5 (0.7) | 6.8 (0.7) | 5.7 (1.1) | 57.3 (5.5) | 65.2 (3.0) | Broken | Broken | Broken | Broken |
| Foldability test (200K) | Pass | Pass | Pass | Pass | Pass | Pass | Pass | Pass | Broken | Broken | Broken | Broken |
| Fold line visibility | Severe | None | None | None | None | None | None | None | Broken | Broken | Broken | Broken |
| Microcracks | No | No | No | No | No | No | No | No | Broken | Broken | Broken | Broken |
| Young's Mod (MPa): MD (Std. Dev.) | 2999 (40) | 2785 (337) | 2225 (259) | 3547 (97) | 4783 (415) | 4229 (209) | 2973 (47) | 2804 (202) | Broken | Broken | Broken | Broken |
| Young's Mod (MPa): TD (std. dev.) | 2980 (26) | 2514 (265) | 2392 (307) | 3227 (52) | 4248 (175) | 425 (108) | 2966 (57) | 2961 (280) | Broken | Broken | Broken | Broken |
| Tens. Stress at Yield (MPa): MD (std. dev.) | 66 (2) | 58 (8) | 45 (6) | 71 (3) | 88 (8) | 80 (2) | 59 (1) | 61 (6) | Broken | Broken | Broken | Broken |
| Tens. Stress at Yield (MPa): TD (std. dev.) | 60 (0) | 55 (7) | 46 (3) | 65 (1) | 86 (3) | 82 (2) | 59 (1) | 63 (6) | Broken | Broken | Broken | Broken |
| Tens. Stress at Break (MPa): MD (std. dev.) | 63 (1) | 38 (15) | 29 (11) | 90 (7) | 138 (7) | 140 (10) | 62 (3) | 65 (10) | Broken | Broken | Broken | Broken |
| Tens. Stress at Break (MPa): TD (std. dev.) | 55 (15) | 41 (13) | 34 (16) | 77 (8) | 115 (15) | 133 (10) | 56 (11) | 66 (2) | Broken | Broken | Broken | Broken |
| Tens. Strain at Yield (%): MD (Std. Dev.) | 2.1 (0) | 2.5 (0.1) | 2.4 (0.2) | 2.6 (0.1) | 2.4 (0.1) | 2.9 (0.1) | 3.9 (0) | 3.9 (0.2) | Broken | Broken | Broken | Broken |
| Tens. Strain at Yield (%): TD (std. dev.) | 2.1 (0) | 2.4 (0) | 2.5 (0.2) | 2.6 (0.1) | 2.7 (0.2) | 2.9 (0.1) | 3.9 (0.1) | 3.6 (0.4) | Broken | Broken | Broken | Broken |

(continued)

| | 20 | 21 | 22 | 23 | 24 | 25 | 26 | 27 | 28 | 29 | 30 | 31 |
|---|---|---|---|---|---|---|---|---|---|---|---|---|
| Tens. Strain at Break (%): MD (std. dev.) | 3 (0) | 158 (63) | 139 (77) | 194 (30) | 144 (19) | 80 (5) | 54 (3) | 60 (8) | Broken | Broken | Broken | Broken |
| Tens. Strain at Break (%): TD (std. dev.) | 10 (17) | 49 (81) | 125 (85) | 209 (18) | 176 (20) | 81 (11) | 37 (3) | 50 (22) | Broken | Broken | Broken | Broken |
| Crystallinity (%) | 6.9 | 8.8 | 13 | 28.6 | 30.9 | 29.4 | 0 | 0 | Broken | Broken | Broken | Broken |
| Ret. (nm) (std. dev) | 5.4 (0.5) | 15 (11) | 30 (9) | 372 (177) | 380 (197) | 325 (178) | <5* | <5* | Broken | Broken | Broken | Broken |
| *Detection limit of 5 nanometers for retardation; "--" means "not measured" | | | | | | | | | | | | |

The results shown in Table 2 indicate that all stretched MLE films pass the dynamic foldability testing. After 200,000 cycles, the films did not show fold lines or cracks. Additionally, each film exhibited an impact dent depth of less than 15 micrometers even at low stretching ratios (e.g., 1.42).

Further experiments were conducted to determine the cause of the improvement in impact resistance. Specifically, whether the improvement in impact resistance was due to chain alignment or crystallization during the biaxial stretching of the films.

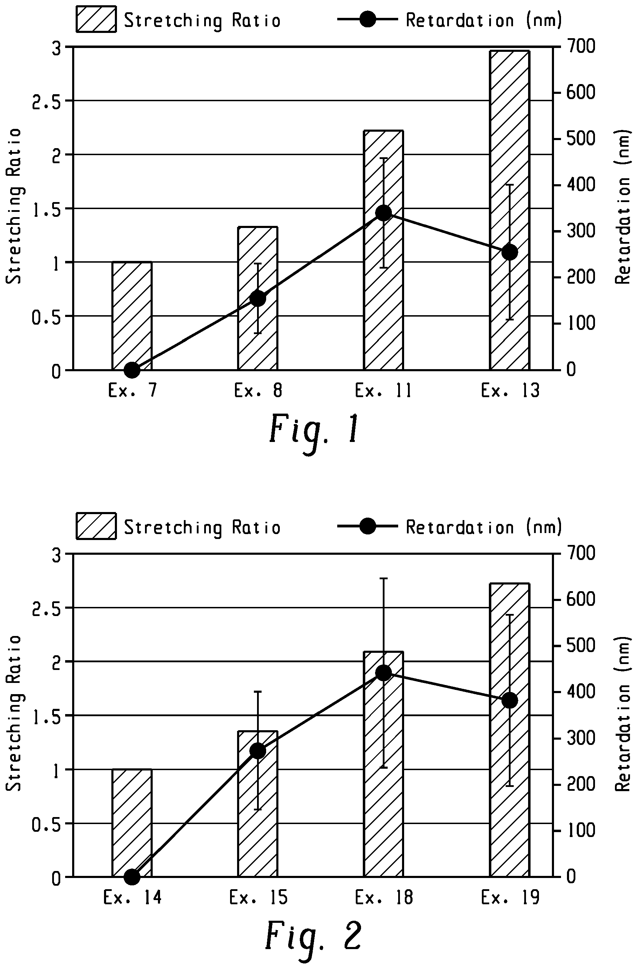

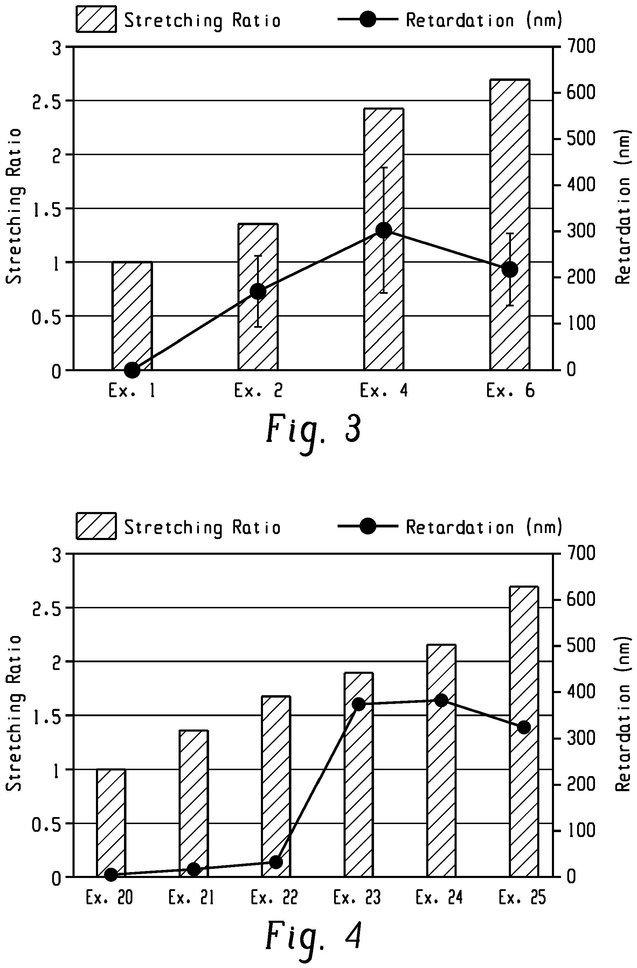

Polymer chain orientation was quantified using the retardation measurements described above. FIG. 1-4 show plots of film retardation as a function of the stretching ratio used to provide the films. FIG. 1 shows data from Examples 7, 8, 11 and 13, each having 17 layers of PC/PET (50:50). FIG. 2 shows data from Examples 14, 15, 18 and 19, each having 17 layers of PC/PET (33:67). FIG. 3 shows data from Examples 1, 2, 4 and 6, each having 128 layers of PC/PET (50:50). FIG. 4 shows data from Examples 20-25, each being a monolayer of PET.

In general, stretched MLE films displayed higher, comparable levels of retardation (e.g., greater than 150 nanometers), regardless of the stretching ratio. Monolayered PET was observed to behave differently, as an increase in retardation (and thus polymer chain alignment) was only observed for a stretching ratio of 2 or more.

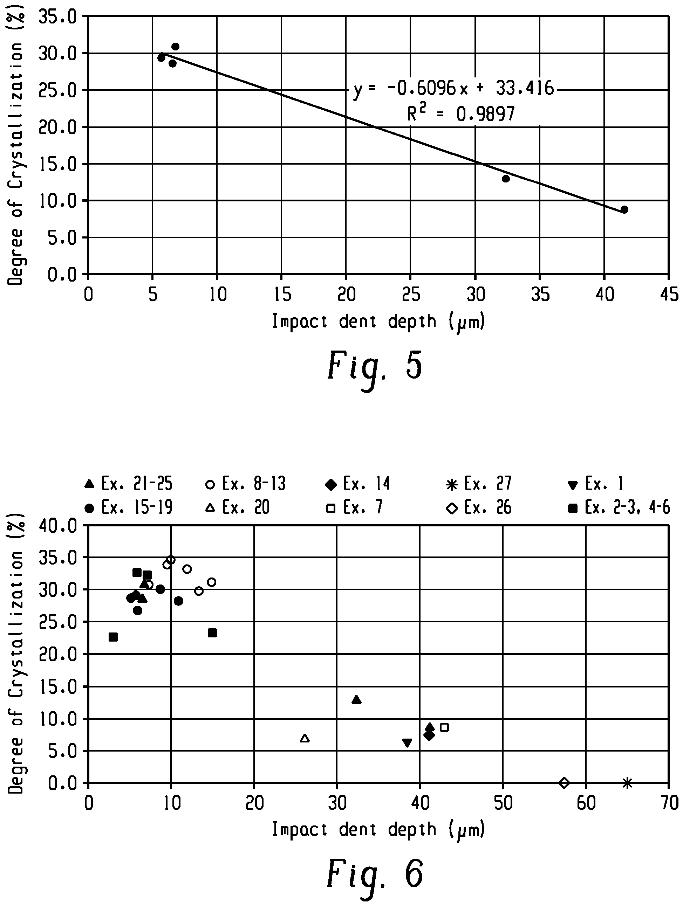

In contrast, a clear correlation between impact resistance (impact dent depth) and degree of crystallization was observed for the monolayered PET films, as shown in FIG. 5. In FIG. 5, the right-most data point corresponds to the lowest stretching ratio of 1.4. The left-most datapoints of FIG. 5 correspond to the highest stretching ratios (e.g., from 2 to 2.8). Thus, without wishing to be bound by theory, the data shown in FIG. 5 indicates that the degree of crystallization, rather than the retardation/polymer chain alignment, is responsible for the improvement in impact resistance of the biaxially stretched films.

A similar trend was observed between the degree of crystallization and the impact resistance for the MLE films, as shown in FIG. 6. As shown in FIG. 6, higher degrees of crystallinity for the stretched MLE films (e.g., greater than 20%) provide better impact resistance (e.g., less than 15 micrometer impact dent depth).

To further confirm the role of the PET crystallinity, a non-stretched MLE film and a monolayer PET film were heated to a temperature close to the temperature of crystallization, without stretching (e.g., at 140°C for 15 minutes). The impact resistance and the degree of crystallinity were measure, and the results are shown in Table 3.

Table 3

| Ex. | Composition (Polymer A:Polymer B) | Film Type | Treatment | Impact Depth (μm) (std. dev., μm) | Crys. (%) |
|---|---|---|---|---|---|
| 32 | PC:PET (33:67) | 17-layer MLE | No heating or stretching | 41 (6.2) | 8.6 |
| 33 | PC:PET (33:67) | 17-layer MLE | Heating for 15 minutes at 140°C | 8.4 (2.5) | 31.6 |
| 34 | PC:PET (33:67) | 17-layer MLE | Bi-axial stretching (2.72 ratio) | 5.2 (1.0) | 28.8 |
| 35 | PET | Monolayer | No heating or stretching | 26.1 (5.3) | 6.9 |
| 36 | PET | Monolayer | Heating for 15 minutes at 140°C | 9.2 (2.8) | 32.1 |
| 37 | PET | Monolayer | Bi-axial stretching (2.69 ratio) | 5.7 (1.1) | 29.4 |

As shown in Table 3, an improvement in impact resistance can be achieved solely by increasing the degree of crystallization.

As a further comparison, the degree of crystallization and impact resistance of three commercially available bi-axially stretched PET films were also determined. The results are summarized Table 4.

Table 4

| Ex. | Composition | Crystallinity (%) | Impact Depth ($\mu$m) (std. dev., $\mu$m) |
|---|---|---|---|
| 38 | PET-BS-1 | 33.7 | 1.75 (0.5) |
| 39 | PET-BS-2 | 40.2 | 3.77 (1.03) |
| 40 | PET-BS-3 | 33.2 | -- |

The multilayer films of the present examples are expected to exhibit good optical properties. For example, the above-described multilayer films can have a transmission at a wavelength of 360 nm to 750 nm of greater than or equal to 80% at the thickness of the multilayer film, as measured according to ASTM D1003-00, under D65 illumination, with a 10 degrees observer, and a haze of less than or equal to 1% at the thickness of the multilayer film, as measured according to ASTM D1003-00, under D65 illumination, with a 10 degrees observer.

Thus the multilayer films discloses herein exhibit an advantageous combination of optical properties, dynamic flexibility, and impact performance. A significant improvement is therefore provided by the present disclosure.

The compositions, methods, and articles can alternatively comprise, consist of, or consist essentially of, any appropriate materials, steps, or components herein disclosed. The compositions, methods, and articles can additionally, or alternatively, be formulated so as to be devoid, or substantially free, of any materials (or species), steps, or components, that are otherwise not necessary to the achievement of the function or objectives of the compositions, methods, and articles.

All ranges disclosed herein are inclusive of the endpoints, and the endpoints are independently combinable with each other. "Combinations" is inclusive of blends, mixtures, alloys, reaction products, and the like. The terms "first," "second," and the like, do not denote any order, quantity, or importance, but rather are used to distinguish one element from another. The terms "a" and "an" and "the" do not denote a limitation of quantity and are to be construed to cover both the singular and the plural, unless otherwise indicated herein or clearly contradicted by context. "Or" means "and/or" unless clearly stated otherwise. Reference throughout the specification to "an aspect" means that a particular element described in connection with the aspect is included in at least one aspect described herein and may or may not be present in other aspects. The term "combination thereof" as used herein includes one or more of the listed elements, and is open, allowing the presence of one or more like elements not named. In addition, it is to be understood that the described elements may be combined in any suitable manner in the various aspects.

Unless specified to the contrary herein, all test standards are the most recent standard in effect as of the filing date of this application, or, if priority is claimed, the filing date of the earliest priority application in which the test standard appears.

Unless defined otherwise, technical and scientific terms used herein have the same meaning as is commonly understood by one of skill in the art to which this application belongs.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

## Claims

1. A multilayer film comprising:

    (a) a plurality of layers, preferably 4 layers to 128 layers, comprising,

        a polymer A layer comprising a polycarbonate copolymer wherein the polycarbonate copolymer comprises a copolymer of polycarbonate and iso- and terephthalate esters of resorcinol at a weight ratio of the iso- and terephthalate esters of resorcinol to the polycarbonate of 20/80; and
        a polymer B layer comprising a semi-crystalline biaxially-oriented polyester, wherein each polymer B layer has a crystallinity of 20 to 40%, determined by differential scanning calorimetry at a heating rate of 10°C per minute from 40 to 280°C;

(b) an interdiffusion region between each polymer A layer and polymer B layer,

wherein a differential solubility parameter of polymer A towards polymer B ($\Delta\delta_{AB}$) is 2.6 MPa$^{1/2}$ $\leq \Delta\delta_{AB} \leq$ 3.0 MPa$^{1/2}$; and

wherein the multilayer film has an average impact dent depth of less than or equal to 15 $\mu$m as determined in accordance with an impact dent depth test and measured using an optical profiler having a 5x objective lens, 1x scan, white illumination, 0.5% threshold, 20 $\mu$m backscan length, and 20 $\mu$m scan length;
wherein the impact dent depth test comprises impacting polymer A side of the multilayer film with a ball point pen tip from a height of 12 cm between the ball point pen tip and the multilayer film, by dropping a 5.4g polymer foam guider comprising the ball point pen tip onto the multilayer film to form an impact dent, wherein the average impact dent depth is an average of six measurements at different locations on the sample, wherein the ball point pen tip has a 1.0 mm ball tip diameter; and
wherein the multilayer film has a dynamic flexure of greater than or equal to 200,000 cycles, as determined by bending 180° on a 10 mm radius cylinder at a rate of 1 hertz; and
wherein the multilayer film, without any skin layers of masking films, has a total thickness of 30 $\mu$m to 70 $\mu$m.

2. The multilayer film of claim 1, wherein the multilayer film, without any skin layers or masking films, has a total thickness of 30 $\mu$m to 65 $\mu$m, or 30 $\mu$m to 60 $\mu$m, or 32 $\mu$m to 60 $\mu$m, or 35 $\mu$m to 60 $\mu$m.

3. The multilayer film of claim 1 or 2, further comprising a skin layer attached to a side of the multilayer film, preferably to opposing sides of the multilayer film, preferably wherein the skin layer comprises a polyester; more preferably the skin layer comprises poly(ethylene terephthalate).

4. The multilayer film of claim 3, wherein the skin layer has a thickness of 1 to 10 $\mu$m.

5. The multilayer film of any of claims 1 to 4, comprising a coating, wherein the coating has a hardness (H) and a modulus (E) determined via nano-indentation, and wherein a ratio of hardness to modulus (H/E) is 0.03 to 0.1, preferably 0.05 to 0.1, wherein the coating can be located on at least one of a skin layer, opposing skin layers, on an outermost layer of the multilayer film, or on opposing outermost surfaces of the multilayer film.

6. The multilayer film of any of claims 1 to 5, wherein the semi-crystalline biaxially-oriented polyester is poly(ethylene terephthalate) formed from terephthalic acid and a combination of ethylene glycol and diethylene glycol.

7. An article comprising the multilayer film of any of claims 1 to 6.

8. The article of claim 7, wherein the article is at least one of a five-wire resistive touch screen, a surface capacitive touch screen, a projected capacitive touch screen, a surface acoustic wave touch screen, an optical imaging touch screen, or an infrared touch screen.

9. The article of claim 7, wherein the article is a display article with curvature or flexure, such as at least one of flexible wristwatch, clothing with integrated display, curved vehicle display, or rollable screen.

10. The article of claim 7, wherein the article is a cellular phone or a tablet.

11. A method for producing the multilayer film of any one or more of claims 1 to 6, comprising:

(i)

coextruding polymer A and polymer B;
splitting the coextruded polymer A and polymer B to obtain two or more sub-streams;
repositioning the sub-streams in an overlapping manner, and contacting the sub-streams to obtain alternating layers of polymer A and polymer B; and
repeating the preceding steps until the desired number of layers has been attained; and
passing the stream through a die to produce a multilayer film; and
biaxially stretching the multilayer film, preferably at a temperature of 140 to 170°C and at a stretching rate of 10 to 500 % per second to provide the multilayer film;
or

(ii)

> separately extruding polymer A and polymer B to form individual polymer streams A and B;
> splitting the individual polymer streams A and B into more than 3 sub-streams, and
> recombining the sub-streams to form a recombined stream, alternating between the A and B sub-streams; and
> passing the recombined stream through a die to produce a multilayer film; and
> biaxially stretching the multilayer film, preferably at a temperature of 140 to 170°C and at a stretching rate of 10 to 500 % per second to provide the multilayer film.

**12.** The method of claim 11, wherein biaxially stretching the multilayer film is conducted as an in-line process or as an off-line process.

**13.** The method of claim 11 or 12, wherein biaxially stretching the multilayer film is to a stretching ratio of greater than 1, or 1.1 to 10, or 1.1 to 3.

**14.** The method of any of claims 11 to 13, further comprising adding a skin layer to the recombined stream prior to passing it through a die.

**15.** The use of the multilayer film of any of claims 1 to 6 in an electronic device that has a dynamic flexure of greater than or equal to 200,000 cycles, as determine by bending 180° on a 10 mm radius cylinder at a rate of 1 hertz.

**Patentansprüche**

**1.** Eine mehrschichtige Folie, die Folgendes umfasst:

(a) eine Vielzahl von Schichten, vorzugsweise 4 bis 128 Schichten, Folgendes umfassend:

> eine Polymer A-Schicht, die ein Polycarbonatcopolymer umfasst, wobei das Polycarbonatcopolymer ein Copolymer aus Polycarbonat und Iso- und Terephthalatestern von Resorcinol mit einem Gewichtsverhältnis der Iso- und Terephthalatester von Resorcinol zum Polycarbonat von 20/80 umfasst; und
> eine Polymer B-Schicht, die einen halbkristallinen biaxial gereckten Polyester umfasst, wobei jede Polymer B-Schicht eine Kristallinität von 20 bis 40% hat, bestimmt durch Differentialscanningkalorimetrie mit einer Erwärmungsgeschwindigkeit von 10°C pro Minute von 40 bis 280°C;

(b) einen Interdiffusionsbereich zwischen jeder Polymer A-Schicht und Polymer B-Schicht, wobei ein Löslichkeitsunterschiedparameter von Polymer A zu Polymer B ($\Delta\delta_{AB}$) 2,6 MPa$^{1/2}$ $\leq$ $\Delta\delta_{AB}$ $\leq$ 3,0 MPa$^{1/2}$ ist; und

> wobei die mehrschichtige Folie eine durchschnittliche Schlageinwirkungstiefe von höchstens 15 $\mu$m hat, bestimmt in einem Schlageinwirkungstiefentest und gemessen mit einem optischen Profilometer, das ein 5x-Objektiv, 1x-Abtastung, weißes Licht, 0,5% Schwellenwert, 20 $\mu$m Backscanlänge und 20 $\mu$m Scanlänge hat;
> wobei der Schlageinwirkungstiefentest Folgendes umfasst: das Aufprallen einer Kugelschreiberspitze auf die mehrschichtige Folie aus einer Höhe von 12 cm zwischen der Kugelschreiberspitze und der mehrschichtigen Folie durch Fallenlassen einer Polymerschaumstoffführung von 5,4 g, die die Kugelschreiberspitze umfasst, auf die mehrschichtige Folie, um eine Einschlagbeule zu bilden, wobei die durchschnittliche Schlageinwirkungstiefe ein Durchschnitt von sechs Messungen an verschiedenen Stellen der Probe ist, wobei die Kugelschreiberspitze einen Spitzendurchmesser von 1,0 mm hat und
> wobei die mehrschichtige Folie eine dynamische Biegung von mindestens 200.000 Zyklen hat, bestimmt durch Biegen um 180° an einem Zylinder mit einem Radius von 10 mm mit einer Rate von 1 Hertz; und
> wobei die mehrschichtige Folie, ohne Skinschichten von Maskierfolien, eine Gesamtdicke von 30 $\mu$m bis 70 $\mu$m hat.

**2.** Die mehrschichtige Folie gemäß Anspruch 1, wobei die mehrschichtige Folie, ohne Skinschichten oder Maskierfolien, eine Gesamtdicke von 30 $\mu$m bis 65 $\mu$m oder 30 $\mu$m bis 60 $\mu$m oder 32 $\mu$m bis 60 $\mu$m oder 35 $\mu$m bis 60 $\mu$m hat.

**3.** Die mehrschichtige Folie gemäß Anspruch 1 oder 2, die weiter eine Skinschicht, haftend an einer Seite der mehrschichtigen Folie, vorzugsweise an gegenüberliegenden Seiten der mehrschichtigen Folie, umfasst, wobei die Skinschicht vorzugsweise einen Polyester umfasst; stärker bevorzugt umfasst die Skinschicht Poly(ethylenterephthalat).

4. Die mehrschichtige Folie gemäß Anspruch 3, wobei die Skinschicht eine Dicke von 1 bis 10 μm hat.

5. Die mehrschichtige Folie gemäß einem beliebigen der Ansprüche 1 bis 4, die eine Beschichtung umfasst, wobei die Beschichtung eine Härte (H) und einen Modul (E) hat, die durch Nanoindentation bestimmt werden, und wobei ein Verhältnis von Härte zu Modul (H/E) 0,03 zu 0,1, vorzugsweise 0,05 zu 0,1, beträgt, wobei die Beschichtung sich auf mindestens einer von einer Skinschicht, gegenüberliegenden Skinschichten, auf einer äußersten Schicht der mehrschichtigen Folie oder auf gegenüberliegenden äußersten Oberflächen der mehrschichtigen Folie befinden kann.

6. Die mehrschichtige Folie gemäß einem beliebigen der Ansprüche 1 bis 5, wobei der halbkristalline biaxial gereckte Polyester Poly(ethylenterephthalat) ist, gebildet aus Terephthalsäure und einer Kombination aus Ethylenglykol und Diethylenglykol.

7. Ein Gegenstand, der die mehrschichtige Folie gemäß einem beliebigen der Ansprüche 1 bis 6 umfasst.

8. Der Gegenstand gemäß Anspruch 7, der mindestens eines von Folgendem ist: einem Fünf-Draht-Resistiv-Touchscreen, einem Surface Capacitive-Touchscreen, einem Projected Capacitive-Touchscreen, einem Surface Acoustic Wave-Touchscreen, einem Optical Imaging-Touchscreen oder einem Infrarot-Touchscreen.

9. Der Gegenstand gemäß Anspruch 7, wobei der Gegenstand ein Display-Gegenstand mit Krümmung oder Biegung ist, wie zum Beispiel mindestens eines von einer flexiblen Armbanduhr, Kleidung mit integriertem Display, gebogenem Fahrzeugdisplay oder Rollbildschirm.

10. Der Gegenstand gemäß Anspruch 7, wobei der Gegenstand ein Mobiltelefon oder ein Tablet ist.

11. Ein Verfahren zur Herstellung der mehrschichtigen Folie gemäß einem oder mehreren der Ansprüche 1 bis 6, das Folgendes umfasst:

    (i)

        das Coextrudieren von Polymer A und Polymer B;
        das Auftrennen der coextrudierten Polymere A und B, um zwei oder mehr Teilströme zu erhalten;
        das Neupositionieren der Teilströme mit Überlappung und das In-Kontakt-Bringen der Teilströme, um abwechselnde Schichten von Polymer A und Polymer B zu erhalten; und
        das Wiederholen der vorhergehenden Schritte, bis die gewünschte Anzahl von Schichten erzielt wurde; und
        das Hindurchleiten des Stroms durch eine Düse, um eine mehrschichtige Folie zu erzeugen; und
        das biaxiale Dehnen der mehrschichtigen Folie, vorzugsweise bei einer Temperatur von 140 bis 170°C und mit einer Dehnungsrate von 10 bis 500% pro Sekunde, um die mehrschichtige Folie herzustellen; oder

    (ii)

        das separate Extrudieren von Polymer A und Polymer B, um separate Polymerströme A und B zu bilden;
        das Auftrennen der separaten Polymerströme A und B in mehr als 3 Teilströme und
        das Rekombinieren der Teilströme, um einen rekombinierten Strom zu bilden, alternierend zwischen den A-und B-Teilströmen; und
        das Hindurchleiten des rekombinierten Stroms durch eine Düse, um eine mehrschichtige Folie zu erzeugen; und
        das biaxiale Dehnen der mehrschichtigen Folie, vorzugsweise bei einer Temperatur von 140 bis 170°C und einer Dehnungsrate von 10 bis 500% pro Sekunde, um die mehrschichtige Folie herzustellen.

12. Das Verfahren gemäß Anspruch 11, wobei das biaxiale Dehnen der mehrschichtigen Folie als In-Line-Prozess oder als Off-Line-Prozess durchgeführt wird.

13. Das Verfahren gemäß Anspruch 11 oder 12, wobei das biaxiale Dehnen der mehrschichtigen Folie bis zu einem Dehnverhältnis von mehr als 1 oder 1,1 bis 10 oder 1,1 bis 3 durchgeführt wird.

14. Das Verfahren gemäß einem beliebigen der Ansprüche 11 bis 13, das weiter das Hinzufügen einer Skinschicht zum rekombinierten Strom vor dem Hindurchleiten desselben durch eine Düse umfasst.

15. Die Verwendung der mehrschichtigen Folie gemäß einem beliebigen der Ansprüche 1 bis 6 in einem elektronischen Gerät, das eine dynamische Biegung von mindestens 200.000 Zyklen hat, bestimmt durch Biegen um 180° an einem Zylinder mit einem Radius von 10 mm mit einer Rate von 1 Hertz.

**Revendications**

1. Film multicouche comprenant :

   (a) une pluralité de couches, de préférence 4 couches à 128 couches, comprenant

   une couche de polymère A comprenant un copolymère de polycarbonate, lequel copolymère de polycarbonate comprend un copolymère de polycarbonate et d'esters iso- et téréphtalates de résorcinol en un rapport en poids des esters iso- et téréphtalates de résorcinol au polycarbonate de 20/80 ; et
   une couche de polymère B comprenant un polyester semi-cristallin à orientation biaxiale, chaque couche de polymère B ayant une cristallinité de 20 à 40 % déterminée par calorimétrie à balayage différentiel à une vitesse de montée en température de 10°C par minute de 40 à 280°C ;

   (b) une région d'interdiffusion entre chaque couche de polymère A et couche de polymère B, dans laquelle le paramètre de solubilité différentielle du polymère A vis-à-vis du polymère B ($\Delta\delta_{AB}$) est de 2,6 MPa$^{1/2}$ $\leq \Delta\delta_{AB} \leq$ 3,0 MPa$^{1/2}$ ; et

   lequel film multicouche a une profondeur moyenne de bosselure d'impact inférieure ou égale à 15 $\mu$m telle que déterminée conformément à un test de profondeur de bosselure d'impact et mesurée au moyen d'un profileur optique ayant un objectif de 5x, un balayage de 1x, un éclairage blanc, un seuil de 0,5 %, une longueur de contre-balayage de 20 $\mu$m, et une longueur de balayage de 20 $\mu$m ;
   dans lequel le test de profondeur de bosselure d'impact comprend le fait de frapper le côté polymère A du film multicouche avec une pointe de stylo à bille depuis une hauteur de 12 cm entre la pointe de stylo à bille et le film multicouche, par chute d'un guide en mousse de polymère de 5,4 g comprenant la pointe de stylo à bille sur le film multicouche pour qu'il se forme une bosselure d'impact, dans lequel la profondeur de bosselure d'impact moyenne est une moyenne de six mesures en des emplacements différents sur l'échantillon, dans lequel la pointe de stylo à bille a un diamètre de pointe de bille de 1,0 mm ; et
   lequel film multicouche a une flexure dynamique supérieure ou égale à 200 000 cycles, telle que déterminée par cintrage à 180° sur un cylindre ayant un rayon de 10 mm à une fréquence de 1 Hertz ; et
   lequel film multicouche, sans aucune couche de peau ou film de masquage, a une épaisseur totale de 30 $\mu$m à 70 $\mu$m.

2. Film multicouche selon la revendication 1, lequel film multicouche, sans aucune couche de peau ou film de masquage, a une épaisseur totale de 30 $\mu$m à 65 $\mu$m, ou de 30 $\mu$m à 60 $\mu$m, ou de 32 $\mu$m à 60 $\mu$m, ou de 35 $\mu$m à 60 $\mu$m.

3. Film multicouche selon la revendication 1 ou 2, comprenant en outre une couche de peau attachée à un côté du film multicouche, de préférence à des côtés opposés du film multicouche, de préférence dans lequel la couche de peau comprend un polyester ; plus préférentiellement la couche de peau comprend du poly(téréphtalate d'éthylène).

4. Film multicouche selon la revendication 3, dans lequel la couche de peau a une épaisseur de 1 à 10 $\mu$m.

5. Film multicouche selon l'une quelconque des revendications 1 à 4, comprenant un revêtement, dans lequel le revêtement a une dureté (H) et un module (E) déterminés via nano-indentation, et dans lequel le rapport de la dureté au module (H/E) est de 0,03 à 0,1, de préférence de 0,05 à 0,1, dans lequel le revêtement peut être situé sur au moins l'une parmi une couche de peau, des couches de peau opposées, sur une couche la plus extérieure du film multicouche, ou sur les surfaces les plus extérieures opposées du film multicouche.

6. Film multicouche selon l'une quelconque des revendications 1 à 5, dans lequel le polyester semi-cristallin à orientation biaxiale est un poly(téréphtalate d'éthylène) formé à partir d'acide téréphtalique et d'une combinaison d'éthylèneglycol et de diéthylèneglycol.

7. Article comprenant le film multicouche de l'une quelconque des revendications 1 à 6.

8. Article selon la revendication 7, lequel article est au moins l'un parmi un écran tactile résistif à cinq fils, un écran tactile capacitif de surface, un écran tactile capacitif projeté, un écran tactile à onde acoustique de surface, un écran tactile à imagerie optique, et un écran tactile à infrarouges.

9. Article selon la revendication 7, lequel l'article est un article d'affichage avec une courbure ou une flexure, tel qu'au moins l'un parmi une montre de poignet flexible, un vêtement avec affichage intégré, un affichage de véhicule courbe, ou un écran enroulable.

10. Article selon la revendication 7, lequel l'article est un téléphone cellulaire ou une tablette.

11. Méthode pour produire le film multicouche de l'une quelconque ou plusieurs des revendications 1 à 6, comprenant :

    (i)

      la coextrusion d'un polymère A et d'un polymère B ;
      la division du polymère A et du polymère B coextrudés pour que soient obtenues deux sous-flux ou plus ;
      le repositionnement des sous-flux d'une manière en chevauchement, et la mise en contact des sous-flux pour que soient obtenues des couches alternées de polymère A et de polymère B ; et
      la répétition des étapes précédentes jusqu'à ce que le nombre souhaité de couches ait été atteint ; et
      le passage du flux à travers une filière pour que soit produit un film multicouche ; et
      l'étirage biaxial du film multicouche, de préférence à une température de 140 à 170°C et à une vitesse d'étirage de 10 à 500 % par seconde pour que soit formé le film multicouche ; ou

    (ii)

      l'extrusion séparée d'un polymère A et d'un polymère B pour que soient formés des flux de polymère individuels A et B ;
      la division des flux de polymère individuels A et B en plus de 3 sous-flux, et
      la recombinaison des sous-flux pour que soit formé un flux recombiné, alternant entre les sous-flux A et B ; et
      le passage du flux recombiné à travers une filière pour que soit produit un film multicouche ; et
      l'étirage biaxial du film multicouche, de préférence à une température de 140 à 170°C et à une vitesse d'étirage de 10 à 500 % par seconde pour que soit formé le film multicouche.

12. Procédé selon la revendication 11, dans lequel l'étirage biaxial du film multicouche est effectué sous la forme d'un traitement en ligne ou sous la forme d'un traitement hors ligne.

13. Procédé selon la revendication 11 ou 12, dans lequel l'étirage biaxial du film multicouche a lieu jusqu'à un taux d'étirage supérieur à 1, ou de 1,1 à 10, ou de 1,1 à 3.

14. Procédé selon l'une quelconque des revendications 11 à 13, comprenant en outre l'addition d'une couche de peau au flux recombiné avant son passage à travers une filière.

15. Utilisation du film multicouche de l'une quelconque des revendications 1 à 6 dans un dispositif électronique qui a une flexure dynamique supérieure ou égale à 200 000 cycles, telle que déterminée par cintrage à 180° sur un cylindre ayant un rayon de 10 mm à une fréquence de 1 Hertz.

Fig. 1

Fig. 2

Fig. 3

Fig. 4

Fig. 5

Fig. 6

**EP 4 301 593 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018142282 A
- WO 2018015932 A
- WO 2018015922 A

**Non-patent literature cited in the description**

- Prediction of Solubility-Parameter Components. **VAN KREVELEN, D.W.** Properties of Polymers. Elsevier, 1976, 213-216
- **HANSEN, C.M.** Hansen Solubility Parameters: A User's Handbook. CRC, 2007
- **W.C. OLIVER ; G.M. PHARR**. *J. Mater. Res.*, 1992, vol. 7 (6), 1564-1583
- **PIETER JANSSEN et al.** *Method and Device for Evaluation of Impact Resistance of Surfaces and Films*, 27 February 2019